(19) Europäisches Patentamt
European Patent Office
Office européen des brevets

(11) **EP 1 743 971 B1**

(12) **FASCICULE DE BREVET EUROPEEN**

(45) Date de publication et mention
de la délivrance du brevet:
**12.09.2012 Bulletin 2012/37**

(21) Numéro de dépôt: **06020789.1**

(22) Date de dépôt: **09.07.2002**

(51) Int Cl.:
*A47L 13/40* *(2006.01)* *D04H 1/435* *(2012.01)*
*D04H 1/498* *(2012.01)* *D04H 1/4291* *(2012.01)*
*D04H 1/4374* *(2012.01)* *D04H 5/03* *(2012.01)*
*D04H 1/492* *(2012.01)* *B32B 5/26* *(2006.01)*
*D04H 5/02* *(2012.01)* *A47L 13/16* *(2006.01)*

(54) **Non-tissé comprenant une nappe en filaments continus, son procédé de fabrication et son application en tant que chiffon d'essuyage**

Vliesstoff mit einer Schicht aus endlosen Filamenten, Verfahren zu dessen Herstellung und Verwendung als Reinigungstuch

Nonwoven comprising a layer of endless filaments, process of manufacturing and its use as cleaning cloth

(84) Etats contractants désignés:
**AT BE BG CH CY CZ DE DK EE ES FI FR GB GR IE IT LI LU MC NL PT SE SK TR**

(30) Priorité: **10.07.2001 FR 0109128**

(43) Date de publication de la demande:
**17.01.2007 Bulletin 2007/03**

(62) Numéro(s) de document de la (des) demande(s) initiale(s) en application de l'article 76 CBE:
**02291715.7 / 1 275 764**

(73) Titulaire: **ANDRITZ Perfojet SAS**
**38330 Montbonnot (FR)**

(72) Inventeur: **Noelle, Frédéric**
**38330 Saint-Nazaire les Eymes (FR)**

(74) Mandataire: **Eidelsberg, Olivier Nathan et al**
**Cabinet Flechner**
**22, avenue de Friedland**
**75008 Paris (FR)**

(56) Documents cités:
**EP-A- 0 814 189      WO-A-00/77286**
**WO-A-03/001962      US-A- 5 525 397**
**US-A- 5 701 643**

## Description

La présente invention se rapporte aux non-tissés, à leur procédé de fabrication et à leur utilisation en tant que chiffon d'essuyage.

Il est connu pour réaliser de tels articles d'essuyage, de consolider par calandrage à chaud des voiles de fibres thermoplastiques. L'opération de calandrage effectue une fusion ponctuelle des fibres thermoplastiques du non-tissé et lui confère ainsi sa cohésion et sa résistance mécanique. Les produits issus d'un tel procédé de consolidation ont une résistance mécanique faible, une résistance à la déchirure faible, et une grande masse volumique. Ces propriétés ne sont pas les meilleures que l'on peut souhaiter pour un chiffon d'essuyage à sec.

Pour pallier les problèmes de résistance mécanique et de résistance à la déchirure, Il a aussi été proposé dans le brevet US-A- 5 525 397 d'associer des voiles fibreux à base de fibres thermoplastiques avec une grille synthétique très coûteuse notamment en polyoléfines, les différents composants du non-tissé étant consolidés ensemble par l'action de jets d'eau sous pression. De tels produits ont une résistance mécanique faible, car elle est essentiellement procurée par la grille de faible masse au mètre carré située entre les couches fibreuses. En revanche de tels produits ont une résistance à la déchirure suffisante et une masse volumique faible qui participent à leurs bonnes performances de capture de poussières.

Au EP-0814189A, on décrit un produit non tissé, volumineux et au toucher agréable, résistant et stable, composé de fibres courtes de plusieurs nappes de filaments disposés de manière unidirectionnelle et étirées.

Or on a trouvé, et c'est ce qui fait l'objet de la présente invention, une structure de non-tissé et son procédé de fabrication sans étirement qui permettent de réaliser non seulement des chiffons d'essuyage à sec ayant à la fois d'excellentes propriétés mécaniques de résistance à la traction et à la déchirure, une très petite masse volumique bien adaptée à la capture d'une grande quantité de poussières et adaptée à la capture de poussières de grandes dimensions comme les cheveux et les poils, et dont les propriétés ]électrostatiques sont très bonnes, mais aussi étant moins coûteux en permettant des économies de 30 à 40% du coût de production par rapport à la technique du brevet américain mentionné ci-dessus puisqu'on ne met pas en oeuvre de grille coûteuse et qui complique le procédé de fabrication.

L'invention a donc pour objet un non-tissé suivant la revendication 1. La légèreté du non-tissé lui permet de bien retenir les poussières. Des perfectionnements sont indiqués dans les sous-revendications.

Par l'indépendance des filaments continus, on entend qu'il n'y a pas de point de fusion entre eux. Un filament a un diamètre allant de 10 à 30 microns et est constitué, contrairement à un fil élastique comme prévu au WO 9406956, d'un brin unique et non pas de brins retordus ou texturés ensemble. L'orientation au hasard des filaments se traduit dans le non tissé par le fait que le rapport de la résistance à la traction à la rupture dans le sens où elle est la plus grande à celle où elle est la plus petite est inférieure à 5 et de préférence, inférieure à 3 et mieux encore inférieure à 2.

On mesure ce rapport en mesurant les résistances à la traction dans le sens machine, puis à 15°, 30°, 45°, 60°, 75° et dans le sens travers en faisant le rapport de la plus grande résistance à la plus petite. L'inélasticité des filaments est telle qu'ils ne reprennent pas leur longueur d'origine lorsqu'on les relâche après étirage. Elle est telle que le non tissé a un domaine élastique entre 0 et 5% et de préférence, entre o et 1%, ce qui signifie qu'il ne reprend pas sa forme dès qu'il est étiré au-delà de 5% ou, de préférence, de 1%.

Pour que la sensation donnée par le non-tissé au toucher soit meilleure, on préfère qu'il comprenne une nappe interposée entre deux voiles.

Après séparation manuelle des voiles et de la nappe, chaque voile a de préférence une épaisseur comprise entre 0,30 mm et 0,80 mm et la nappe de filaments a de préférence une épaisseur comprise entre 0,20 mm et 0,60 mm.

La légèreté du non-tissé lui permet de bien retenir les poussières.

Le potentiel initial de surface d'un échantillon circulaire de 80 mm de diamètre du non-tissé suivant l'invention, qui a subi une décharge couronne de - 8 Kv, est, en valeur absolue, supérieure à 2000 volts et, après 10 mn, supérieure à 1500 volts.

Lorsqu'il est utilisé comme chiffon d'essuyage, le non-tissé suivant l'invention a une bonne résistance mécanique parfaitement adaptée aux contraintes induites par les opérations d'essuyage et une masse volumique suffisamment petite pour capturer une grande quantité de poussières et capturer des particules de grande dimension tels que des cheveux et poils. En raison de la petite masse volumique du non-tissé, les poussières peuvent se loger dans les interstices entre les fibres ou même s'emmêler aux fibres lâches du non-tissé. Ces propriétés, de paire avec les bonnes propriétés électrostatiques, participent à l'attraction des poussières.

On obtient ainsi un non tissé qui a le potentiel de surface d'un échantillon circulaire de 80 mm de diamètre ayant subi une décharge couronne de -8 kvolts et est, après 10 minutes, en valeur absolue, supérieure à 1500 Volts (après séparation manuelle des voiles et nappes, chaque voile a une épaisseur comprise entre 0,30 mm et 0,80 mm et la nappe a une épaisseur comprise entre 0,20 mm et 0,60 mm). Le non-tissé obtenu a une résistance à la traction dans le sens long supérieure à 30 N, a une résistance à la traction dans le sens travers supérieure à 30 N, qui a un allongement à la traction dans le sens long en % supérieur à 30 % et sens travers supérieur à 30 %. La masse surfacique du non-tissé obtenu est comprise entre 35 et 100 g/m2.

L'invention vise également un procédé de fabrication d'un non-tissé tel que défini à la revendication 15.

Le chiffon d'essuyage peut donc comprendre une nappe de filaments continus par exemple en polypropylène ou de polyéthylène, légèrement calandrée pour obtenir la cohésion de la nappe sans fusion des filaments. La nappe de filaments continus légèrement calandrée peut avoir une masse surfacique comprise entre 5 et 40 g/m2 et de préférence comprise entre 15 et 30 g/m2.

La nappe de filaments continus en polypropylène est calandrée à une température inférieure à 100°C et une pression de calandrage inférieure à 50 N/mm pour éviter la fusion des filaments. La cohésion apportée par le calandrage est juste suffisante pour enrouler et dérouler la nappe sans rupture de celle-ci.

Elle peut présenter une longueur de rupture inférieure à 1020 m. La longueur de rupture L est définie par l'EDANA (European Disposables And Nonwovens Association) par la formule suivante :

$$L = F \times 10^6 / (w \times g \times 9,81)$$

L = longueur de rupture en mètres
F = force de rupture en newtons
w = largeur de l'éprouvette de traction en mm
g = masse au mètre carré du non-tissé testé

Cette caractéristique est importante pour l'accrochage des fibres thermoplastique à faible niveau d'énergie de liaison par les jets d'eau. En effet, à faible niveau d'énergie de liaison par les jets d'eau, le non-tissé conserve son volume et sa faible masse volumique et donc ses bonnes performances d'essuyage et de capture de poussières. Dans le cas contraire, si la longueur de rupture de la nappe de filaments continus est supérieure à 1020 m, l'énergie hydraulique nécessaire pour avoir une bonne cohésion des différentes couches est trop élevée et provoque un excès de consolidation qui augmente la masse volumique du chiffon d'essuyage et en réduit les performances d'essuyage.

Sur cette nappe de filaments continus sont déposés de préférence de chaque côté, des voiles de fibres thermoplastiques de 10 à 30 g/m2 de préférence cardés. Ces voiles de fibres seront de préférence constitués de fibres de polyester ou de polypropylène de titre compris de préférence entre 1 dtex et 3.3 dtex et de longueur de 20 à 60 mm, de préférence de 38 à 55 mm.

Les différentes couches sont consolidées et enchevêtrées ensemble par action de jets d'eau à une pression inférieure à 200 bars et une énergie hydraulique de liaison inférieure à 0,25 kwh/kg.

Le non-tissé est séché dans un four à air traversant à une température de 120°C et à une vitesse de 20 m/min Le séchage est terminé lorsque le non-tissé a une humidité résiduelle comprise entre 2% et 5%. Le chiffon d'essuyage présente une masse volumique finale inférieure ou égale à 0.06 g/cm3.

On peut procéder ainsi sans effectuer d'étirage tout au long du procédé, étirage qui nécessiterait une consolidation plus grande par fusion qui empêcherait d'obtenir les procédés d'essuyage.

On peut mesurer l'énergie hydraulique de liaison de la manière suivante.

Pour chaque injecteur est calculé le débit $D_i$ puis l'énergie hydraulique $E_i$.

$$D_i = 3600 * k * n * (\Pi * d^2 / 4) * \sqrt{(2 * g * p * 10)}$$

$$E_i. = D_i * p / 36$$

$D_i$ = débit d'eau par injecteur exprimé en m3/h par mètre de largeur de travail.
$E_i.$ = énergie hydraulique de liaison par injecteur exprimée en kWh par mètre de largeur de travail.
d = diamètre des trous formant les jets et exprimé en mètres.
k = coefficient dépendant de la forme des trous. Généralement égal à 0,70.
$\Pi$ = nombre de Pythagore
n = nombre de jets par mètre
p = pression de l'eau exprimée en bars
g = accélération de la pesanteur égale à 9,81 ms$^{-2}$

Ensuite, l'énergie totale de liaison hydraulique est obtenue en faisant la somme des $E_i$. de chaque injecteur :

$$E_{HT} = E_{i1} + E_{i2} + ..... + E_{in}$$

Ensuite la production totale de non-tissés en kg/h et par mètre de largeur de travail est obtenue selon la formule :

$$P_T = m * v * 60$$

$P_T$ = production totale de non-tissé en kg/h et par mètre de largeur de travail.
m = masse surfacique de non-tissé en kg/m$^2$
v = vitesse de production en mètres par minute.

Enfin, l'énergie hydraulique de liaison exprimée en kwh/kg de production est obtenue selon la formule :

$$E_L = E_{HT}/P_T$$

On effectue le stade de séchage de la manière habituelle, par exemple dans un four à air chaud.
L'invention et les avantages qui en ressortent seront mieux compris grâce aux exemples de réalisation qui suivent, donnés à titre indicatif mais non limitatif, et qui sont illustrés par les schémas annexés dans lesquels :

- La figure 1 représente une installation permettant de produire des non-tissés conformes à l'invention,
- La figure 2 est une vue en coupe d'un non-tissé conforme à l'invention,
- La figure 3 représente schématiquement l'installation de mesure de potentiel de surface, et
- La figure 4 est un graphique donnant le potentiel de surface en volts des non-tissés des exemples en fonction du temps.

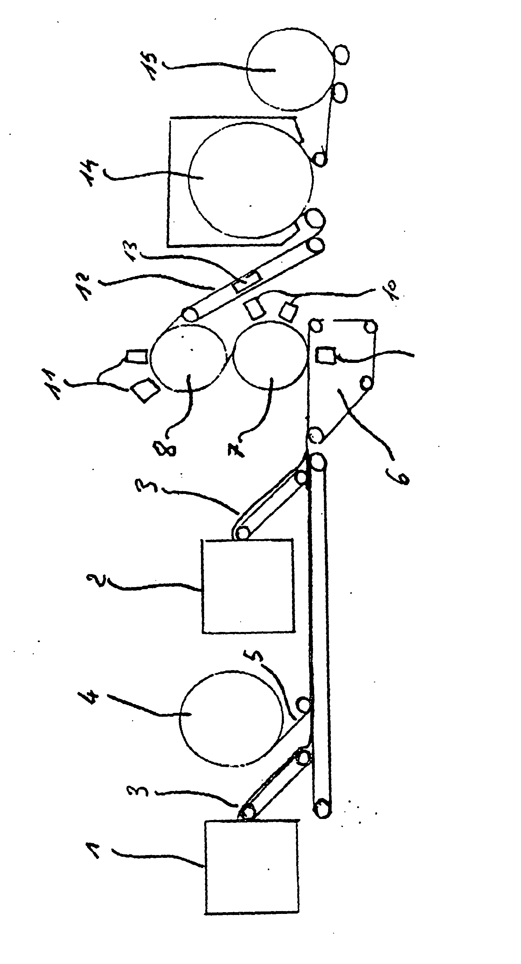

En se reportant aux figures annexées, et plus particulièrement à la figure 1, une ligne de production permettant de réaliser un non-tissé conformément à l'invention se compose essentiellement d'un ensemble, désigné par les références générales 1 et 2 permettant de réaliser par cardage ou autre technique similaire, deux nappes constituées de fibre synthétiques telles que polyester ou polypropylène.
Entre les deux nappes de fibres synthétiques cardées 3 est déroulée par l'intermédiaire d'un dérouleur 4 une nappe de filaments continus 5 légèrement calandrée.
La nappe de filaments continus indépendants est de préférence constituée de filaments continus de polypropylène.
La nappe de filaments continus est formée par voie fondue, par exemple par le procédé connu sous le terme spunbond.
La nappe de filaments continus en polypropylène est calandrée à une température inférieure à 100°C et une pression de calandrage inférieure à 50 N/mm pour éviter la fusion des filaments.
La longueur de rupture des filaments continus en polypropylène est inférieure à 1020 m.
Sur cette nappe de filaments continus sont déposés de préférence de chaque côtés, des voiles de fibres thermoplastiques de 10 à 30 g/m2 de préférence cardés, c'est à dire issus de machines textiles de formation de voiles de fibres nommées cardes. Ces voiles de fibres seront de préférence constitués de fibres de polyester ou de polypropylène de titre compris entre 1 dtex et 3.3 dtex de préférence 1,7 dtex et de longueur de 20 à 60 mm, de préférence 38 à 55 mm.
L'ensemble des 3 nappes superposées est acheminé sur un tapis transporteur 6 dans une machine de liaison par jets d'eau à deux cylindres 7 et 8 par exemple.
L'ensemble constitué des 3 couches est d'abord comprimé mécaniquement entre le convoyeur 6 et le premier cylindre 7 puis est mouillé par un premier injecteur 9 délivrant des jets d'eau à basse pression. L'ensemble est consolidé par une première série d'injecteurs 10 délivrant des jets d'eau à haute pression.
Ensuite l'ensemble constitué des 3 couches est transféré à un second cylindre 8 sur lequel il est consolidé par l'action d'une seconde série d'injecteurs 11. Il est ensuite exprimé sur une convoyeur 12 équipé d'un caisson aspirant 13 relié à une source de vide.
La consolidation des différentes couches est réalisée avec une énergie de liaison de moins de 0,25 kwh/kg et de préférence inférieure à 0,15 kwh/kg. La masse volumique finale ainsi obtenue est inférieure à 0,06 g/cm3.

Le non-tissé ainsi obtenu est séché dans un four à air traversant 14 puis est réceptionné sur un dispositif d'enroulement 15.

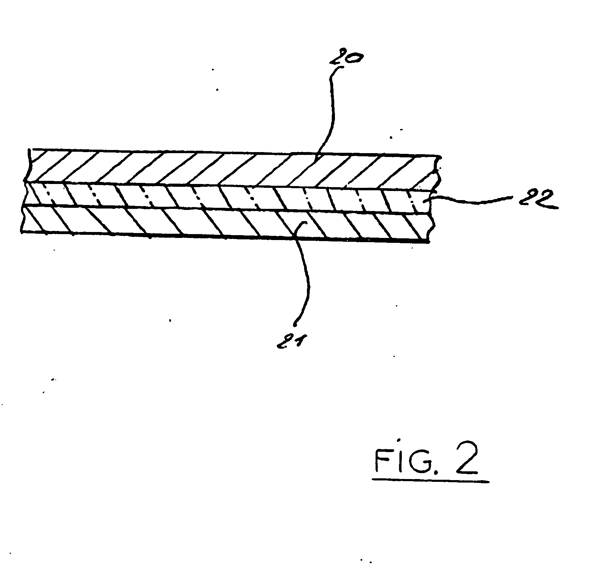

La figure 2 est une vue en coupe d'un chiffon d'essuyage tel qu'obtenu selon l'invention. Les couches extérieures 20 et 21 sont constituées de fibres thermoplastiques de polyester ou de polypropylène. Entre ces couches de fibres thermoplastiques a été inséré une couche 22 de filaments continus spunbond.

Les tests de laboratoire de mesure d'épaisseur, de masse volumique, de résistance dans le sens long et dans le sens travers, d'allongement dans le sens long et dans le sens travers, de déchirure sens long et sens travers sont conduits selon les normes ERT de l'EDANA (European Disposables And Nonwovens Association), à savoir

a) Epaisseur

On conditionne l'échantillon pendant 24 heures et on effectue l'essai à 23°C et à une humidité relative de 50%. On mesure l'épaisseur du non-tissé en mesurant la distance entre un plateau de référence sur lequel repose le non-tissé et un plateau presseur parallèle qui applique une pression précise sur la surface soumise à l'essai. L'appareil consiste en deux plaques horizontales circulaires fixées à un bâti. La plaque supérieure se déplace verticalement. Elle a une surface d'environ 2500 mm2. La plaque de référence a une surface plane d'un diamètre plus grand d'au moins 50 mm que celui de la plaque supérieure. Il est prévu un équipement permettant de suspendre verticalement la pièce soumise à l'essai entre les deux plateaux.

La pièce d'essai a des dimensions de 180 x 80 mm a plus ou moins 5 mm pour la largeur et la longueur. Il est prévu un dispositif de mesure de la distance entre les plaques lorsque celles-ci se sont rapprochées au point d'appliquer une pression de 0,02 kpa.

b) <u>Résistance et allongement dans le sens long et dans le sens travers :</u>

On conditionne un échantillon pendant 24 heures et on effectue l'essai à 23°C et à une humidité relative de 50%. On utilise pour le test un dynamomètre comprenant un jeu de mâchoires fixes et un jeu de mâchoires mobiles se déplaçant à une vitesse constante. Les mâchoires du dynamomètre ont une largeur utile de 50 mm. Le dynamomètre est équipé d'un enregistreur qui permet de tracer la courbe de la force de traction en fonction de l'allongement. On coupe 5 échantillons de 50 mm plus ou mois 0,5 mm de largeur et de 250 mm de longueur, ceci dans le sens long et dans le sens travers du non tissé. Les échantillons sont testés un par un , à une vitesse constante de traction de 100 mm par minute et avec une distance initiale entre mâchoires de 200 mm. Le dynamomètre enregistre la courbe de la force de traction en newtons en fonction de l'allongement.

c) <u>Résistance à la déchirure dans le sens long et dans le sens travers :</u>

On conditionne un échantillon pendant 24 heures et on effectue l'essai à 23° C et à une humidité relative de 50%

On utilise pour le test un dynamomètre comprenant un jeu de mâchoires fixes et un jeu de mâchoires mobiles se déplaçant à une vitesse constante. Les mâchoires du dynamomètre ont une largeur utile de 50 mm. Le dynamomètre est équipé d'un enregistreur qui permet de tracer la courbe de la force de traction en fonction du déplacement des mâchoires mobiles. On coupe 5 échantillons de 75 mm plus ou moins 1 mm de largeur et de 150 mm plus ou moins 2 mm de longueur, ceci dans le sens long et dans le sens travers du non-tissé. Le grand côté de 150 mm est coupé dans le sens de la direction machine ou travers à tester. On trace deux lignes obliques définissant un trapèze isocèle de 25 mm de base par 100 mm de base et de 75 mm de hauteur et dont les bases sont centrées à 75 mm des bords des éprouvettes. Une petite entaille de 5 mm est réalisée à l'aide de ciseaux au centre de la base de 25 mm de chaque trapèze. Cette entaille a pour but d'amorcer la déchirure lors des tests.

Les échantillons sont testés un par un. Les mâchoires du dynamomètre sont placées à une distance initiale de 25 mm. L'échantillon est placé entre les mâchoires de manière à ce que la petite base du trapèze soit légèrement tendue et que la grande base du trapèze soit détendue.

Les échantillons sont testées à une vitesse constante de traction de 100 mm par minute.

c) <u>Masse au mètre carré :</u>

On conditionne un échantillon pendant 24 heures et on effectue l'essai à 23° C et à une humidité relative de 50%.

On coupe au moins 3 échantillons d'une surface d'au moins 50000 mm2 avec un appareil de découpe appelé massicot.

Chaque échantillon est pesé sur une balance de laboratoire ayant une précision de 0, 1 % de la masse des échantillons pesés.

d) Masse volumique :

La masse volumique est calculée à partir de l'épaisseur mesurée et de la masse au mètre carré.

mv = g/ex 1000
mv = masse volumique en gramme par centimètre cube
g = masse au mètre carré du non-tissé
e = épaisseur du non- tissé testé

f) Capture de poussières :

Le test de capture de poussières consiste à prendre un chiffon de 10 cm x 15 cm de côté. Cette dimension de chiffon est bien adaptée à la surface d'une main. Une poussière constituée de poussières domestiques et de cheveux coupés est déposée en couche régulière sur une surface plane de 1 mètre carré. Le chiffon est pesé avant essuyage et après essuyage qui consiste à passer le chiffon sur la surface jusqu'à saturation du chiffon, c'est-à-dire que les poussières ne sont plus capturées par le chiffon. La capture de poussières est calculée en pourcentage de la masse de chiffon d'essuyage propre selon la formule :

$$100 \times (M2 - M1) / M1$$

où

M1 est la masse exprimée en grammes du chiffon avant essuyage
M2 est la masse exprimée en grammes du chiffon après essuyage

g) Mesure de potentiel de surface

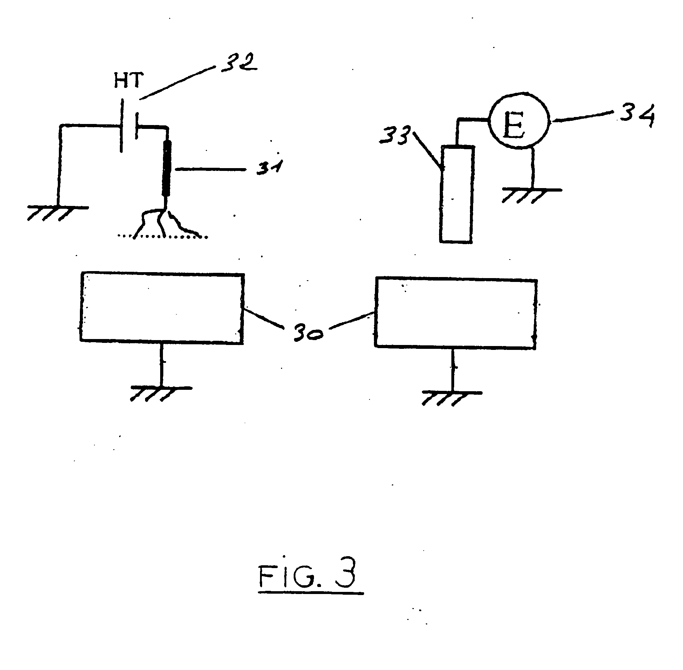

La figure 3 est une représentation schématique du matériel de laboratoire utilisé pour les mesures de potentiel de surface.
Un échantillon de 80 mm de diamètre est disposé sur un porte échantillon circulaire 30 relié à la terre.
L'échantillon est placé sous une aiguille 31 reliée à un générateur haute tension 32.
Une décharge couronne de - 8 kvolts est créée entre l'aiguille et l'échantillon pendant une seconde.
Une fois l'échantillon chargé, il est positionné automatiquement sous une sonde de mesure électrostatique 33 de marque Monroe. Cette sonde est connectée à un voltmètre électrostatique 34 qui permet de mesurer le potentiel en surface de l'échantillon. Le voltmètre est relié à un PC qui réalise l'acquisition des valeurs de potentiel de surface en fonction du temps. La mesure du potentiel de surface est poursuivie pendant 10 minutes et une courbe de déclin de potentiel de surface en fonction du temps est ensuite tracée.
L'essai est répété 5 fois sur 5 échantillons circulaires différents et cela pour chaque non-tissé.
Les exemples suivants et l'exemple comparatif illustrent l'invention.

Exemple 1 :

Une nappe de filaments continus spunbond polypropylène légèrement calandrée de 20 g/m2 est disposée entre 2 voiles de fibres de polyester cardé de 20 g/m2 chacun. Les fibres de polyester ont un titre de 1.7 dtex et une longueur de 38 mm. L'ensemble constitué des 3 couches superposées est soumis à l'action de jets d'eau sur une installation telle que décrite figure 1 et avec une énergie de consolidation de 0.12 kwh/kg. Puis le non-tissé ainsi obtenu est séché à une température de 120°C dans un four à air traversant à une vitesse de 20 m/min. On obtient un non-tissé de masse surfacique 60 g/m2 et de rapport R de la résistance à la traction à la rupture dans le sens machine à celle dans le sens travers est inférieur à 2.

Exemple 2 :

L'exemple 1 est répété en remplaçant les 2 voiles de fibres de polyester par 2 voiles de fibres de polypropylène de 20 g/m2 chacun. Les fibres de polypropylène ont un titre de 1.7 dtex et une longueur de 40 mm. L'ensemble constitué des 3 couches superposées est soumis à l'action de jets d'eau sur une installation telle que décrite figure 1 et avec une énergie de consolidation de 0.12 kwh/kg. Puis le non-tissé ainsi obtenu est séché à une température de 120°C dans un four à air traversant à une vitesse de 20 m/min. On obtient un non-tissé de masse surfacique 60 g/m2 et de R < 2.

Exemple comparatif 1 :

Un non-tissé classique pour chiffon d'essuyage constitué d'une grille de renfort en polypropylène entre deux couches de fibres de polyester est réalisé de la manière suivante.

Une grille de polypropylène extrudé de 5 g/m2 comprenant 10 fils par centimètre en sens long et 9 fils par centimètre en sens travers est disposée entre 2 voiles de fibres de polyester cardées de 28 g/m2 chacun. Les fibres de polyester ont un titre de 1.7 dtex et une longueur de 38 mm. Les fibres de polyester sont identiques à celles utilisées dans l'exemple1. L'ensemble constitué des 3 couches superposées est soumis à l'action de jets d'eau sur une installation telle que décrite figure 1 et avec une énergie de consolidation de 0.12 kwh/kg. Puis le non-tissé ainsi obtenu est séché à une température de 120°C dans un four à air traversant à une vitesse de 20 m/.min. On obtient un non-tissé de masse surfacique 60 g/m2.

Les produits obtenus conformément à l'invention et celui de l'exemple comparatif sont testés pour déterminer l'épaisseur, la masse volumique, la résistance dans le sens long et dans le sens travers, l'allongement dans le sens long et dans le sens travers, le potentiel de surface après décharge couronne et sont évolution au cours du temps.

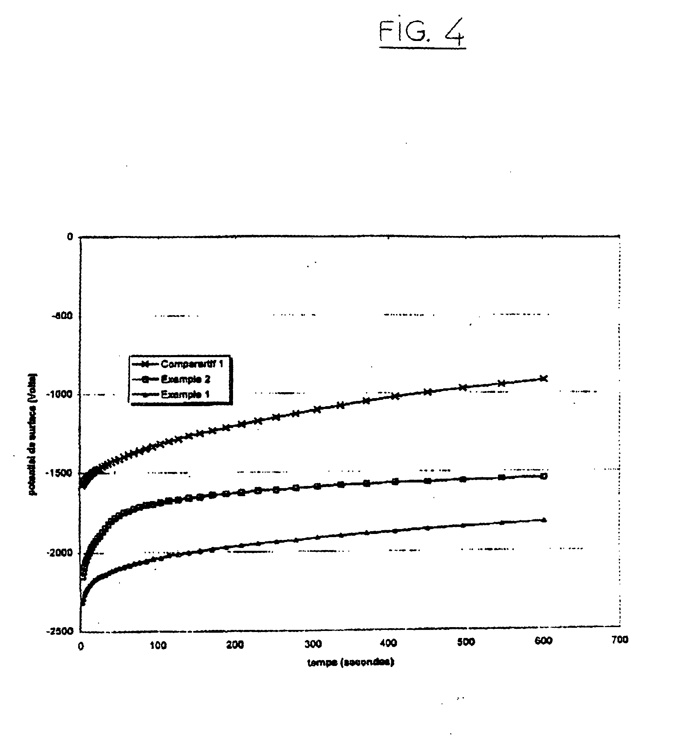

Les résultats sont regroupés dans le tableau Iet le graphique de la figure 4.

Par rapport à des produits réalisés de manière habituelle, et ainsi que cela ressort du tableau de résultats, les non-tissés réalisés conformément à l'invention présentent comme avantage de plus se charger d'électricité statique en surface et de conserver cette charge électrostatique longtemps. Et ils ont l'avantage de capturer nettement plus de poussières.

Par ailleurs leur masse volumique est plus petite que celle des produits classiques c'est à dire que leur épaisseur à poids au mètre carré équivalent et plus importante qu'un non-tissé d'essuyage habituel. Ce qui est favorable à la capture des poussières de grandes dimensions.

Par ailleurs, leur résistance tant dans le sens long que dans le sens travers sont meilleures que celle du non-tissé d'essuyage habituel, ce qui leur garantit la stabilité et la résistance à l'usage.

Tableau I

| Caractéristiques | Unités | Exemple 1 | Exemple 2 | Comparatif 1 |
|---|---|---|---|---|
| Poids | g/m2 | 59 | 59 | 60 |
| Epaisseur | mm | 1,25 | 1,25 | 0,92 |
| Masse volumique | g/cm3 | 0,05 | 0,05 | 0,07 |
| Résistance sens long | N/50 mm | 135 | 193 | 30,7 |
| Résistance sens travers | N/50 mm | 102 | 105 | 63,0 |
| Allongement sens long | % | 92 | 114 | 29,7 |
| Allongement sens travers | % | 131 | 169 | 47,0 |
| Résistance à la déchirure sens long | N/50 mm | 35,6 | 25,7 | 8,12 |
| Résistance à la déchirure sens travers | N/50 mm | 37,3 | 34,8 | 18,7 |
| Potentiel de surface initial | Volts | -2320 | -2230 | -1590 |
| Potentiel de surface après 1 minute | Volts | -2079 | -1739 | -1382 |
| Potentiel de surface après 10 minutes | Volts | -1819 | -1542 | -917 |
| Poussières capturées | % | 196 | 162 | 90 |

Le chiffon d'essuyage suivant l'invention peut être utilisé notamment pour l'essuyage à sec de toute surface, notamment en métal, en matière plastique, en céramique, en verre, en tissu de la manière suivante :

Le chiffon est tenu d'une main et appliqué sur la surface à nettoyer avec un déplacement soit rectiligne, soit par petits cercles. Un seul passage suffit.

Lorsque le chiffon est saturé de poussières, il est jeté et remplacé par un chiffon propre.

**Revendications**

1. Non-tissé qui comprend au moins un voile de fibres discontinues thermoplastiques, **caractérisé en ce que** le voile est hydroenchevêtré à une nappe non étirée en filaments continus, inélastiques, indépendants et orientés au hasard et **en ce que** le non-tissé a une masse volumique non supérieure à 0,06 g/cm$^3$.

2. Non-tissé suivant la revendication 1, **caractérisé en ce qu'**il comprend une nappe interposée entre deux voiles.

3. Non-tissé suivant la revendication 1 ou 2, **caractérisé en ce que** le rapport de la résistance à la traction à la rupture dans le sens où elle est la plus grande à celle où elle est la plus petite est inférieure à 5 et de préférence inférieure à 2.

4. Non-tissé suivant l'une des revendications précédentes, **caractérisé en ce que** le potentiel initial de surface d'un échantillon circulaire de 80 mm de diamètre, ayant subi une décharge couronne de -8 kvolts, est, en valeur absolue, supérieure à 2000 volts.

5. Non-tissé suivant l'une des revendications précédentes, **caractérisé en ce que** le potentiel de surface d'un échantillon circulaire de 80 mm de diamètre ayant subi une décharge couronne de -8 kVolts est, après 10 minutes, en valeur absolue, supérieure à 1500 Volts.

6. Non-tissé suivant les revendications précédentes, **caractérisé en ce qu'**il a une masse surfacique comprise entre 35 et 100 g/m2.

7. Non-tissé suivant la revendication 1, 2, 3 ou 4, **caractérisé en ce qu'**après séparation manuelle des voiles et nappes, chaque voile a une épaisseur comprise entre 0,30 mm et 0,80 mm et la nappe a une épaisseur comprise entre 0,20 mm et 0,60 mm.

8. Non-tissé suivant l'une des revendications précédentes, **caractérisé en ce qu'**il a une résistance à la traction dans le sens long supérieure à 30N/50 mm.

9. Non-tissé suivant l'une des revendications précédentes, **caractérisé en ce qu'**il a une résistance à la traction dans le sens travers supérieure à 30N/50 mm.

10. Non-tissé suivant l'une des revendications précédentes, **caractérisé en ce qu'**il a un allongement à la traction dans le sens long en % supérieur à 30%.

11. Non-tissé suivant l'une des revendications précédentes, **caractérisé en ce qu'**il a un allongement à la traction en % dans le sens travers supérieur à 30%.

12. Non-tissé suivant l'une des revendications précédentes, caractérisé en qu'il a une résistance à la déchirure dans le sens long supérieure à 20 N/50 mm.

13. Non-tissé suivant l'une des revendications précédentes, **caractérisé en ce qu'**il a une résistance à la déchirure dans le sens travers supérieure à 20 N/50 mm.

14. L'utilisation d'un non-tissé suivant l'une des revendications précédentes comme chiffon d'essuyage.

15. Procédé de fabrication d'un non-tissé suivant les revendications 1 à 13. **caractérisé en ce qu'**il consiste

    - à calandrer une nappe de filaments continus inélastiques et orientés au hasard à une température inférieure au point de fusion de la matière qui les constitue et sous une pression de calandrage inférieure à 50 N/mm.
    - à fabriquer au moins un voile de fibres discontinues thermoplastiques,
    - à hydroenchevêtrer la nappe et 0.25 kwh/kg au moins un voile avec une énergie de liaison inférieure à 0.25 kwh/kg de manière à obtenir un non-tissé humide,
    - à sécher le non-tissé humide.

16. Procédé suivant la revendication 15, **caractérisé en ce que** la nappe est en polypropylène.

17. Procédé suivant la revendication 15 ou 16, **caractérisé en ce que** les voiles sont cardés et on un poids de 10 à 30 g/m2.

18. Procédé suivant les revendications 16 à 17, **caractérisé en ce que** les voiles sont en polyester ou en polypropylène.

19. Procédé suivant les revendications 16 à 18, **caractérisé en ce que** les fibres ont une longueur comprise entre 20 et 60 mm.

20. Procédé suivant les revendications 16 à 19, **caractérisé en ce que** les fibres ont un titre compris entre 1dtex et 3,3 dtex.

**Claims**

1. Nonwoven comprising at least one veil of discontinuous thermoplastic fibres, **characterized in that** the veil is hydroentangled with an unstretched web of inelastic continuous filaments that are independent and randomly oriented and **in that** it has a density not exceeding 0.06g/cm$^3$.

2. Nonwoven according to Claim 1, **characterized in that** it comprises a web interposed between two veils.

3. Nonwoven according to Claim 1 or 2, **characterized in that** the ratio of the tensile strength **in that** direction in which it is the greatest to that in which it is smallest is less than 5, preferably less than 2.

4. Nonwoven according to one of the preceding claims, **characterized in that** the initial surface potential of a circular specimen 80 mm in diameter having undergone a corona discharge of -8 kV is, in absolute value, greater than 2000 volts.

5. Nonwoven according to one of the preceding claims, **characterized in that** the surface potential of a circular specimen 80 mm in diameter having undergone a corona discharge of -8 kV is, in absolute value, greater than 1500 volts after 10 minutes.

6. Nonwoven according to the preceding claims, **characterized in that** it has a weight per unit area of between 35 and 100 g/m$^2$.

7. Nonwoven according to Claim 1, 2, 3 or 4, **characterized in that** after the veils and web have been manually separated, each veil has a thickness of between 0.30 mm and 0.80 mm and the web has a thickness of between 0.20 mm and 0.60 mm.

8. Nonwoven according to one of the preceding claims, **characterized in that** it has a tensile strength in the machine direction of greater than 30 N/50 mm.

9. Nonwoven according to one of the preceding claims, **characterized in that** it has a tensile strength in the cross direction of greater than 30 N/50 mm.

10. Nonwoven according to one of the preceding claims, **characterized in that** it has a % tensile elongation in the machine direction of greater than 30%.

11. Nonwoven according to one of the preceding claims, **characterized in that** it has a % tensile elongation in the cross direction of greater than 30%.

12. Nonwoven according to one of the preceding claims, **characterized in that** it has a tear strength in the machine direction of greater than 20 N/50 mm.

13. Nonwoven according to one of the preceding claims, **characterized in that** it has a tear strength in the cross direction of greater than 20 N/50 mm.

14. Use of a nonwoven according to one of the preceding claims as a cleaning cloth.

15. Process for manufacturing a nonwoven according to Claims 1 to 13, **characterized in that** it comprises :

- calendering a web of randomly oriented continuous inelastic continuous filaments at a temperature below the melting point of a constituent material of the fibres and at a calendering pressure of less than 50 N/mm.
- manufacturing a veil of discontinuous thermoplastic fibres,
- hydroentangling the web and at least one veil with a bonding energy of less than 0.25 kWh/Kg so as to obtain a wet nonwoven, and
- drying the wet nonwoven.

16. Process according to Claim 15, **characterized in that** the web is made of polypropylene.

17. Process according to Claim 15 or 16, **characterized in that** the veils are carded and have a weight of 10 to 30 g/m$^2$.

18. Process according to Claims 16 to 17, **characterized in that** the veils are made of polyester or polypropylene.

19. Process according to Claims 16 to 18, **characterized in that** the fibres have a length of between 20 and 60 mm.

20. Process according to Claims 16 to 19, **characterized in that** the fibres have a linear density of between 1 dtex and 3.3 dtex.


**Patentansprüche**

1. Vliesstoff, der mindestens einen Flor aus thermoplastischen, durch Wassereinwirkung verfestigten, nicht-fortlaufenden Fasern umfasst, **dadurch gekennzeichnet, dass** der Flor durch Wassereinwirkung mit einem nicht-gestreckten Vlies aus unelastischen, unabhängigen und zufällig orientierten Endlosfilamenten verfestigt ist, und dass er eine Volumenmasse nicht größer als 0,06 g/cm$^3$ hat.

2. Vliesstoff nach Anspruch 1, **dadurch gekennzeichnet, dass** er einen Vlies umfasst, der zwischen zwei Flore gelegt ist.

3. Vliesstoff nach einem der Ansprüche 1 oder 2, **dadurch gekennzeichnet, dass** das Verhältnis der Zugfestigkeit bis zum Reißen in der Richtung, in der sie am größen ist, zu derjenigen in der Richtung, in der sie am kleinsten ist, kleiner als 5, vorrugsweise kleiner als 2, ist.

4. Vliesstoff nach einem der vorhergehenden Ansprüche, **dadurch gekennzeichnet, dass** der Absolutwert des anfänglichen Oberflächenpotentials einer kreisförmigen Probe mit 80 mm Durchmesser, die einer Koronaentladung von -8 kV ausgesetzt war, größer als 2000 Volt ist.

5. Vliesstoff nach einem der vorhergehenden Ansprüche, **dadurch gekennzeichnet, dass** der Absolutwert des Oberflächenpotentials einer kreisförmigen Probe mit 80 mm Durchmesser, die einer Koronaentladung von -8 kV ausgesetzt war, nach 10 Minuten größer als 1500 Volt ist.

6. Vliesstoff nach den vorhergehenden Ansprüchen, **dadurch gekennzeichnet, dass** er eine Flächenmasse zwischen 35 und 100 g/m$^2$ hat.

7. Vliesstoff nach Anspruch 1, 2, 3 oder 4, **dadurch gekennzeichnet, dass** nach manueller Trennung der Flore und Vliese jeder Flor eine Dicke zwischen 0,30 mm und 0,80 mm und der Vlies eine Dicke zwischen 0,20 mm und 0,60 mm hat.

8. Vliesstoff nach einem der vorhergehenden Ansprüche, **dadurch gekennzeichnet, dass** er eine Zugfestigkeit in Längsrichtung größer als 30N/50 mm hat.

9. Vliesstoff nach einem der vorhergehenden Ansprüche, **dadurch gekennzeichnet, dass** er eine Zugfestigkeit in Querrichtung größer als 30N/50 mm hat.

10. Vliesstoff nach einem der vorhergehenden Ansprüche, **dadurch gekennzeichnet dass** er in Längsrichtung eine Zugdehnung in % größer als 30 % hat.

11. Vliesstoff nach einem der vorhergehenden Ansprüche, **dadurch gekennzeichnet dass** er in Querrichtung eine Zugdehnung in % größer als 20 % hat.

12. Vliesstoff nach einem der vorhergehenden Ansprüche, **dadurch gekennzeichnet, dass** er in Längsrichtung eine Reißfestigkeit größer als 20 N/50 mm hat.

13. Vliesstoff nach einem der vorhergehenden Ansprüche, **dadurch gekennzeichnet, dass** er in Querrichtung eine Reißfestigkeit größer als 20 N/50 mm hat.

14. Verwendung eines Vliesstoffes nach einem der vorhergehenden Ansprüche als Wischlappen.

15. Verfahren zur Herstellung eines Vliesstoffes nach den Ansprüchen 1 bis 13, **dadurch gekennzeichnet, dass** es folgendes umfasst

- Kalandrieren eines Vlieses aus uneleastischen, zufällig orientierten Endlosfilamenten bei einer Temperatur unterhalb des Schmelzpunktes des Materials, aus dem sie gebildet sind, und unter einem Kalendrierungsdruck unterhalb von 50 N/mm,
- Herstellen mindestens eines Flors aus nicht-fortlaufenden, thermoplastischen Fasern,
- Verfestigen des Vlieses und mindestens eines Flors durch Wassereinwirkung mit einer Verbindungsenergie kleiner als 0,25 kWh/kg, so dass ein nasser Vliesstoff erhalten wird,
- Trocknen des nassen Vliesstoffes.

16. Verfahren nach Anspruch 15, **dadurch gekennzeichnet, dass** der Vlies aus Polypropylen ist.

17. Verfahren nach Anspruch 15 oder 16, **dadurch gekennzeichnet, dass** die Flore kardiert sind und ein Gewicht von 10 bis 30 g/m$^2$ haben.

18. Verfahren nach den Ansprüchen 16 bis 17, **dadurch gekennzeichnet, dass** die Flore aus Polyester oder aus Polypropylen sind.

19. Verfahren nach den Ansprüchen 16 bis 18, **dadurch gekennzeichnet, dass** die Fasern eine Länge zwischen 20 und 60 mm haben.

20. Verfahren nach den Ansprüchen 16 bis 19, **dadurch gekennzeichnet, dass** die Fasern einen Titer zwischen 1 dtex und 3,3 dtex haben.

FIG. 2

FIG. 3

## FIG. 4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- US 5525397 A
- EP 0814189 A
- WO 9406956 A